(19) Europäisches Patentamt / European Patent Office / Office européen des brevets

(11) **EP 2 077 057 B1**

(12) **FASCICULE DE BREVET EUROPEEN**

(45) Date de publication et mention
de la délivrance du brevet:
**16.03.2011 Bulletin 2011/11**

(21) Numéro de dépôt: **07858491.9**

(22) Date de dépôt: **02.10.2007**

(51) Int Cl.:
***H04W 72/04*** *(2009.01)*

(86) Numéro de dépôt international:
**PCT/FR2007/052058**

(87) Numéro de publication internationale:
**WO 2008/043936 (17.04.2008 Gazette 2008/16)**

(54) **DÉTECTION DE BANDE DE FRÉQUENCES LIBRE**

ERKENNUNG UNBELEGTER FREQUENZBÄNDER

DETECTION OF UNOCCUPIED FREQUENCY BAND

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **12.10.2006 FR 0608936**

(43) Date de publication de la demande:
**08.07.2009 Bulletin 2009/28**

(73) Titulaire: **FRANCE TELECOM
75015 Paris (FR)**

(72) Inventeurs:
• **GHOZZI, Mohamed
06560 Valbonne (FR)**
• **DOHLER, Michael
08024 Barcelona (ES)**

(74) Mandataire: **Cabinet Plasseraud
52, rue de la Victoire
75440 Paris Cedex 09 (FR)**

(56) Documents cités:
**WO-A2-2004/021126     US-A- 5 311 541
US-A1- 2002 176 386**

**Description**

La présente invention se rapporte à la radio cognitive, et plus particulièrement à la détection d'une bande de fréquences libre pour la radio cognitive.

Le spectre de fréquences radio comprend différentes bandes de fréquences radio qui sont respectivement attribuées à différents types d'utilisation. Ainsi, par exemple, la bande de fréquences autour de 900 MHz, c'est-à-dire entre 872 et 960 MHz environ, a été attribuée au réseau de télécommunications de type GSM (pour 'Global System for Mobile communications').

Pendant certaines périodes, pour certaines localisations, il est possible qu'une ou plusieurs canaux de fréquences sur cette bande restent inutilisés pour le type d'utilisation auquel elles sont attribuées. Des mesures effectuées par la FCC (pour 'Federal Communications Commission') montrent ainsi que l'utilisation de ces bandes de fréquences n'est pas efficace, puisqu'il est fort probable, à un certain moment et à un endroit donné, qu'une ou même plusieurs bandes de fréquences du spectre radio restent disponibles.

Afin d'optimiser l'utilisation du spectre radio, il est prévu de permettre, dans certaines conditions, l'utilisation des bandes de fréquences libres du spectre radio pour d'autres types d'utilisation que ceux auxquels elles ont été attribuées. Dans ces conditions, pour une bande de fréquences donnée, les utilisateurs du type d'utilisation auquel cette bande de fréquences a été attribuée sont prioritaires, mais ne sont pas les seuls à pouvoir utiliser une telle bande de fréquences. En effet, lorsqu'une telle bande de fréquences est libre, c'est-à-dire lorsqu'elle n'est pas utilisée par un quelconque utilisateur et uniquement jusqu'à ce qu'un utilisateur prioritaire l'utilise à nouveau, d'autres utilisateurs peuvent également être autorisés à l'utiliser.

Pour utiliser ainsi les bandes de fréquences libres du spectre radio, il est requis qu'un terminal puisse modifier ses paramètres de transmission en fonction du contexte radio environnant. Un tel terminal met en oeuvre les principes de la radio cognitive.

La FCC a déjà permis une telle utilisation des bandes de fréquences qui sont attribuées à la télévision.

Toutefois, afin d'éviter toutes perturbations de l'utilisation des bandes de fréquences par les utilisateurs prioritaires, les autres utilisateurs de ces bandes de fréquences doivent répondre à certaines exigences. Ainsi, il est requis qu'un tel utilisateur non prioritaire soit adapté pour détecter si une bande de fréquences du spectre radio est libre ou si elle est déjà utilisée.

A cet effet, il a déjà été proposé de détecter la disponibilité d'une telle bande de fréquences, en déterminant la localisation du terminal de façon à accéder à une base de données qui est en mesure de fournir à ce terminal des informations relatives à l'état du spectre radio aux environs du lieu où il se trouve. Toutefois, une telle détection reste statique et requiert une infrastructure de réseau adéquate.

Il a également été prévu de détecter si une bande de fréquences est disponible en se basant sur des caractéristiques connues du signal de télécommunications à détecter dans la bande de fréquences considérée. Une telle détection présente notamment l'inconvénient de se baser sur des informations a priori, relatives au signal que l'on cherche à détecter et qui est potentiellement transmis dans la bande de fréquences considérée.

A <W02004/021126 A2 décrit une méthode pour déterminer si une fréquence est libre pour être sélectionnée. Une fréquence est choisie aléatoirement et des mesures sur cette fréquence sont réalisé pendant un intervalle de temps.>

Le problème de l'invention est donc de détecter une bande de fréquences libre sans qu'il soit nécessaire de connaître a priori les caractéristiques précises d'un signal potentiellement transmis dans la bande de fréquence considérée.

Un premier aspect de la présente invention propose un procédé de détection d'une bande de fréquences libre relativement à au moins un équipement dans un réseau de télécommunications.

Le procédé comprend les étapes suivantes :

/a/ obtenir des premières valeurs relatives à un signal reçu pour des instants correspondants respectifs, dans ladite bande de fréquences ;

/b/ obtenir un signal composé sous la forme de vecteurs respectivement associés auxdites premières valeurs, chaque vecteur ayant M composantes résultant respectivement des produits de ia première valeur associée audit vecteur avec M secondes valeurs relatives au signal reçu respectivement pour des temps de décalage par rapport à l'instant correspondant à ladite première valeur, M étant un nombre entier supérieur ou égal à 2; et /c/ déterminer au moins un premier et un deuxième vecteur d'énergie, contenant chacun M composantes correspondant respectivement à des valeurs d'énergie du signal composé pour les M temps de décalage, respectivement sur une première bande de fréquences et sur une deuxième bande de fréquences situées de part et d'autre d'une fréquence de référence; et

/d/ décider si ladite bande de fréquences est libre sur la base d'une comparaison d'une distribution des valeurs d'énergie du signal composé sur la première bande de fréquences relativement aux M temps de décalage et d'une distribution des valeurs d'énergie du signai composé sur ia deuxième bande de fréquences relativement aux M temps de décalage.

Grâce à ces dispositions, on est en mesure de décider si une bande de fréquences considérée est occupée, c'est-à-dire si un signal de télécommunications est transmis dans cette bande de fréquences, ou si elle est disponible, de manière simple et sans connaissance a priori de caractéristiques spécifiques du signal de télécommunications qui est susceptible d'être transmis dans la bande de fréquences considérée. En effet, la seule condition relative à un tel signal de télécommunications réside dans l'hypothèse de départ selon laquelle un tel signal de télécommunications est un signal cyclostationnaire contrairement à un signal de bruit qui lui est stationnaire.

Ainsi, en combinant les premières valeurs du signal reçu dans la bande de fréquences considérée à des instants déterminés, avec les secondes valeurs à des temps décalés par rapport aux instants déterminés correspondant aux premières valeurs, on obtient le signal composé.

Selon un avantage que présente l'invention, on fournit une détection de bande de fréquences libres qui peut être aisément mise en oeuvre et qui ne se fonde pas sur la connaissance de caractéristiques a priori du signal de télécommunications qui peut potentiellement être transmis dans la bande de fréquences considérée. De ce fait, une telle détection peut permettre de détecter n'importe quel signal de télécommunications transmis dans une bande de fréquences donnée.

Pour obtenir le signal reçu dans la bande de fréquences souhaitée, on peut prévoir de filtrer le signal reçu sur cette bande de fréquences.

Puis, à partir de la distribution des valeurs d'énergie de ce signal composé sur deux bandes de fréquences contiguës situées de part et d'autre d'une fréquence de référence, on est en mesure de déterminer si un signal cyclostationnaire est présent ou non dans le signal reçu, et de ce fait de décider si la bande de fréquences considérée est libre ou non.

Lorsqu'il est décidé que la bande de fréquences est libre, le terminal considéré peut alors l'utiliser, soit en transmission, soit en réception. Cet aspect n'est pas l'objet de la présente invention, il ne sera donc pas détaillé ici.

A l'étape /c/, on peut détecter si un signal cyclostationnaire est présent dans ie signal reçu sur la base de la comparaison des distributions des valeurs d'énergie.

Dans un mode de réalisation de la présente invention, la comparaison des première et deuxième distributions des valeurs d'énergie est avantageusement réalisée sur la base d'un test statistique non paramétrique de distribution.

L'utilisation d'un test non paramétrique contribue à permettre la mise en oeuvre d'un tel procédé sans connaissance de caractéristiques spécifiques relatives au signal de télécommunications à rechercher dans la bande de fréquences considérée. En effet, un test statistique non paramétrique, tel que par exemple le test de Wolcoxon-Mann-Whitney, permet de tester une population statistique sans connaissance a priori de caractéristiques sur cette population.

Dans un mode de réalisation de la présente invention, la première bande de fréquences comprend les fréquences ayant une valeur comprise entre 0 et la valeur de la fréquence de référence et la deuxième bande de fréquences comprend les fréquences ayant une valeur comprise entre la valeur de la fréquence de référence et le double de la valeur de la fréquence de référence.

En procédant ainsi, on détermine si un signal de télécommunications cyclostationnaire, ayant une fréquence cyclique inférieure à la fréquence de référence, a été détecté dans la bande de fréquences ou non.

De préférence, on choisit une fréquence de référence de telle sorte qu'elle ait une valeur supérieure à une fréquence cyclique d'un signal de télécommunications dans le réseau de télécommunication.

Dans un mode de réalisation de la présente invention, les première et deuxième bandes de fréquences sont de même largeur.

A l'étape /c/, on peut réaliser les étapes suivantes :

/c1/ obtenir par filtrage des vecteurs associés aux premières valeurs, d'une part, sur la première bande de fréquences un premier ensemble de vecteurs, et d'autre part sur la deuxième bande de fréquences un deuxième ensemble de vecteurs ;

/c2/ obtenir un premier, respectivement un deuxième, vecteur d'énergie, dans la première, respectivement deuxième, bande de fréquences en déterminant relativement à chaque temps de décalage, une valeur d'énergie de signal composé par sommation des carrés des composantes des vecteurs du premier, respectivement du deuxième, ensemble de vecteurs qui correspondent audit temps de décalage ;

/c3/ comparer la distribution des valeurs d'énergie du signal composé sur la première bande de fréquences relativement aux M temps de décalage et la distribution des valeurs d'énergie du signal composé sur la deuxième bande de fréquences relativement aux M temps de décalage.

Un deuxième aspect de la présente invention propose un dispositif de détection d'une bande de fréquences libre comprenant des moyens adaptés pour mettre en oeuvre un procédé de détection selon le premier aspect de la présente invention.

Un troisième aspect de la présente invention propose un équipement de communication à travers un réseau comprenant un dispositif de détection d'une bande de fréquences libre selon le deuxième aspect de la présente invention.

Un quatrième aspect de la présente invention propose un programme d'ordinateur destiné à être installé dans un dispositif de détection selon la deuxième aspect de la présente invention, comprenant des instructions aptes à mettre en oeuvre le procédé selon le premier aspect de la présente invention, lors d'une exécution du programme par des moyens de traitement du dispositif de détection.

Un cinquième aspect de la présente invention propose un support d'enregistrement lisible par un ordinateur sur lequel est enregistré le programme d'ordinateur selon le quatrième aspect de la présente invention.

L'invention sera également mieux comprise à l'aide des dessins, sur lesquels :

- la figure 1 illustre les principales étapes d'un procédé selon un mode de réalisation de la présente invention ;
- la figure 2 illustre un spectre de fréquence du signal composé selon un mode de réalisation de la présente invention ;
- la figure 3 représente un schéma algorithmique de mise en oeuvre d'un procédé selon un mode de réalisation de la présente invention ; et
- la figure 4 illustre une architecture d'un dispositif de détection de bande de fréquences libre selon un mode de réalisation de la présente invention.

La présente invention est décrite ci-après dans son application à un terminal qui souhaite transmettre et/ou recevoir des signaux dans un réseau de télécommunications et qui a des capacités pour utiliser les principes de la radio cognitive. Il est de ce fait capable de modifier ses paramètres de transmission et/ou de réception en fonction des conditions radio environnantes. Aucune limitation n'est attachée au type de réseau de télécommunications dans lequel le terminal transmet et/ou reçoit.

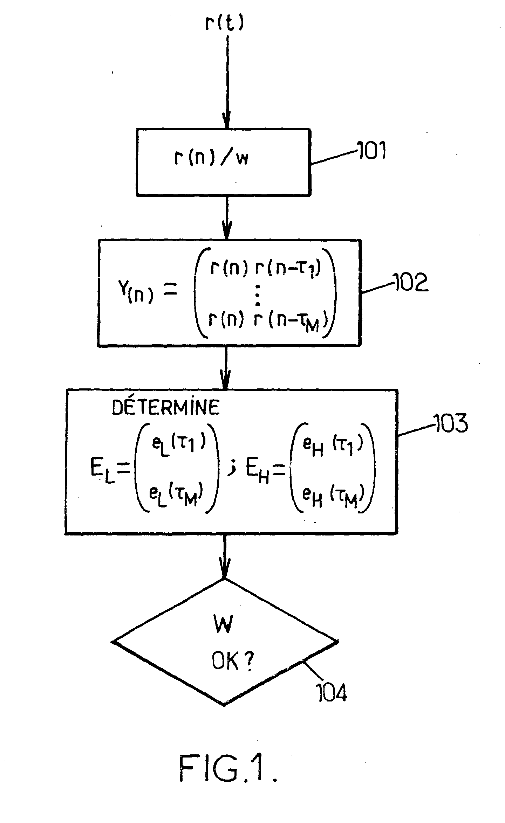

La figure 1 illustre les principales étapes d'un procédé selon un mode de réalisation de la présente invention.

Le terminal souhaite déterminer si, dans le spectre radio, une bande de fréquences W est disponible. Aucune limitation n'est attachée à la présente invention en ce qui concerne la bande de fréquences W.

A une étape 101, le terminal filtre dans une bande de fréquences W considérée un signal reçu r(t) et échantillonne ce signal reçu pour obtenir des premières valeurs relatives au signal reçu pour des instants correspondants d'indices respectifs n, n étant compris entre 1 et Q, Q étant un nombre entier quelconque. Ces premières valeurs, obtenues à partir du signal reçu ainsi filtré et échantillonné, sont référencées par la suite r(n), pour n compris entre 1 et Q.

Un objet de la présente invention est de choisir l'hypothèse la plus probable parmi les deux hypothèses suivantes : le signal reçu r(n) correspond à un signal de bruit b(n), ou bien ce signal reçu r(n) correspond à un signal de télécommunications s(n) auquel s'ajoute un signal de bruit b(n).

Le signal de bruit b(n) correspond à un signal de bruit b(t) qui a été soumis au même traitement que celui appliqué au signal reçu r(t), c'est-à-dire que le signal de bruit b(t) a été filtré sur la bande de fréquences W et échantillonné.

En fait, dans un mode de réalisation de la présente invention, décider si une bande de fréquences W est libre ou non revient à déterminer la présence ou non d'un signal de télécommunications s(n), c'est-à-dire un signal considéré comme étant cyclostationnaire, dans le signal reçu r(n).

Aucune caractéristique a priori n'est utilisée pour détecter un tel signal de télécommunications dans le signal reçu. Ainsi, la fréquence cyclique $f_0$ du signal de télécommunications qui est potentiellement présent dans le signal reçu est inconnue.

Dans un mode de réalisation de la présente invention, un signal de télécommunications cyclostationnaire échantillonné s(n) vérifie les équations suivantes :

$$m_s(n) = m_s(n+T_0) \qquad\qquad (1)$$

où $m_s(n)=E\{s(n)\}$ et E est l'opérateur espérance mathématique ; et

$$R_s(n,\tau)=R_s(n+T_0, \tau) \qquad\qquad (2)$$

où $R_s(n,\tau)=E\{s(n).s(n+\tau)\}$
où $T_0$ est la période cyclique de valeur égale à $1/f_0$ ; et
où $\tau$ est un temps de décalage par rapport à l'instant n correspondant à la valeur du signal s(n).

On peut alors développer en série de Fourier l'équation (2), et obtenir l'équation suivante :

$$R_x(n,\tau) = \sum_k R^{\chi_n}(\tau)e^{j2\pi\frac{1}{t_0}n} \tag{3}$$

où

$$R_s^{\alpha}(\tau) = \frac{1}{T_0}\sum_{l=0}^{T-1} R_s(l,\tau).e^{-j2\pi(lTe).\alpha}$$

où $T_e$ est la période d'échantillonnage du signal.

Dans un mode de réalisation de la présente invention, un signal de bruit b(n) est considéré comme un signal stationnaire à échantillons indépendants et identiquement distribués.

Le signal b(n) vérifie donc les équations suivantes :

$$m_b(n) = K \; ; \tag{4}$$

où $m_b(n) = E\{b(n)\}$ et K est une constante ; et

$$R_b(n,\tau) = R_b(\tau) \tag{5}$$

où $R_b(n,\tau) = E\{b(n).b(n+\tau)\}$

Par la suite, les harmoniques de la fréquence cyclique fondamentale $f_0$ de s(n) sont considérées comme étant de valeur nulle.

A une étape 102, on détermine un signal composé Y sous la forme de vecteurs Y(n) de valeurs qui correspondent respectivement aux premières valeurs relatives au signal r(n). Ainsi à un instant d'indice n, le signal composé est représenté par le vecteur Y(n) qui vérifie l'équation suivante :

$$Y(n) = \begin{pmatrix} y_{\tau1}(n) \\ y_{\tau2}(n) \\ ... \\ y_{\tau M}(n) \end{pmatrix} \tag{6}$$

où

$$y_{\tau i}(n) = r(n) \times r(n - \tau i) \tag{7}$$

où $\tau i$ est un temps de décalage par rapport à l'instant d'indice n, pour i compris entre 1 et M, M étant un nombre entier supérieur ou égal à 2.

En d'autres termes, le vecteur de signal composé Y(n) associé à une première valeur de signal r(n) a M composantes, $y_{\tau1}(n)$, ..., $y_{\tau M}(n)$, résultant respectivement des produits de la première valeur de signal associée r(n) avec M secondes valeurs de signal $r(n-\tau_i)$, relatives au signal reçu et décalées dans le temps par rapport à l'instant d'indice n correspondant à ladite première valeur de signal r(n) de M temps de décalage $\tau i$, pour i compris entre 1 et M, respectivement.

On est alors en mesure de déterminer si le signal reçu r(n) comprend un signal de télécommunications ou non sur la base de certaines caractéristiques statistiques du signal composé Y(n).

En effet, à partir des équations (3) et (5), on peut écrire :

$$E(y_{\tau i}(n)) = \sum_{k=-1}^{1} R_r^{k/T_0}(\tau) e^{j2\pi \frac{k}{T_0} n} \qquad (7)$$

ou bien encore :

$$y_{\tau i}(n) = \sum_{k=-1}^{1} R_r^{k/T_0}(\tau i) e^{j2\pi \frac{k}{T_0} n} + \varepsilon_{\tau i}(n) \qquad (8)$$

Dans l'équation (8), on peut ainsi distinguer dans le second membre, le premier terme de l'addition qui correspond à la somme d'une fréquence pure et le second terme $\varepsilon_{\tau i}(n)$ de l'addition qui correspond à un signal de bruit. Par conséquent, d'après ce qui précède, la valeur du signal composé Y(n) à l'instant n, pour le temps de décalage ri, peut être interprétée comme la somme de la fréquence pure $f_0$, et d'un bruit additif $\varepsilon_{\tau i}(n)$ de moyenne nulle.

Or, la valeur d'une composante $y_{\tau i}$ du signal composé à l'instant n pour le temps de décalage $\tau i$ vérifie l'équation suivante :

$$y_{\tau i} = s(n).s(n-\tau i) + s(n).b(n-\tau i) + s(n-\tau i).b(n) + b(n).b(n-\tau i).$$

où b(n).b(n- $\tau i$) est sensiblement égal au bruit additif $\varepsilon_\tau(n)$, et où s(n). b(n- $\tau$) et s(n-$\tau$).b(n) sont des expressions dont la valeur est négligeable devant la valeur du bruit additif.

Par conséquent, compte tenu des approximations énoncées ci-dessus, on peut obtenir l'équation suivante :

$$y_{\tau i} \approx \sum_{k=-1}^{1} R_r^{k/T_0}(\tau i) e^{j2\pi \frac{k}{T_0}} + B_{\tau i}(n) \qquad (9)$$

où $B_{\tau i}(n)$=b(n).b(n-$\tau i$)

Puisque b(n) est un signal stationnaire et à échantillons indépendants et identiquement distribués, alors un signal de bruit $B_{\tau i}(n)$ est également un signal stationnaire à échantillons indépendants et identiquement distribués.

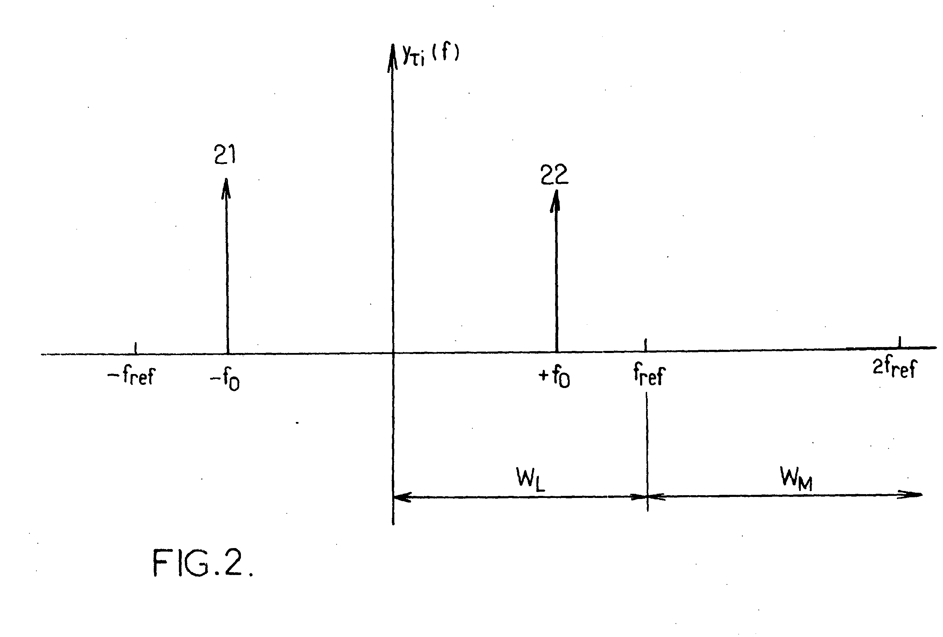

La figure 2 illustre dans le plan des fréquences, le spectre de la composante $y_{\tau i}(n)$ du signal composé Y(n) et un niveau $\eta$ du spectre du signal de bruit $B_{\tau i}(n)$. Une raie 21 et 22 aux fréquences respectives $f_0$ et $-f_0$ apparaît alors plus ou moins nettement en fonction du niveau de bruit $\eta$ du signal $B_{\tau i}(n)$. Ainsi, la présence d'une raie à la fréquence $f_0$ dans la composante $y_{\tau i}(n)$ du signal composé traduit la présence d'un signal de télécommunications de fréquence $f_0$ dans le signal reçu r(n) dans la bande de fréquences W. Si tel est le cas, la bande de fréquences W est alors déclarée occupée.

Partant de cette caractéristique attachée aux composantes du signal composé Y(n), on prévoit alors de comparer la distribution de valeurs d'énergie du signal composé Y(n) relativement aux M temps de décalage sur une bande de fréquences $W_L$ comprenant la fréquence cyclique $f_0$, et la distribution de valeurs d'énergie du signal composé Y(n) relativement aux M temps de décalage sur une bande de fréquences $W_H$ contiguë à la bande de fréquences $W_L$ et qui ne contient pas la fréquence $f_0$. Pour rappel, la fréquence $f_0$ n'est pas connue. Il suffit d'être en mesure de majorer la valeur de cette fréquence $f_0$ pour mettre en oeuvre un mode de réalisation de la présente invention.

En effet, on considère une valeur de fréquence de référence $f_{ref}$ qui majore la valeur de la fréquence d'un signal de télécommunications qui est susceptible d'être transmis dans la bande de fréquences W.

Puis, la première bande de fréquences $W_L$ comprenant la potentielle fréquence cyclique $f_0$ du signal de télécommunications recherché est définie suivant l'équation suivante :

$$W_L = ]0, f_{ref}] \; ;$$

et la deuxième bande de fréquences est définie comme suit :

$$W_H = ]f_{ref} \, ; \, 2.f_{ref}]$$

On soulignera que dans l'exemple particulier de réalisation décrit ici, les deux bandes de fréquences $W_L$ et $W_H$ sont de même largeur. Toutefois, on pourrait envisager d'utiliser deux bandes de fréquences de largeurs respectives différentes.

Dans un mode de réalisation de la présente invention, pour obtenir respectivement dans les première et deuxième bandes de fréquences, la distribution des valeurs d'énergie du signal composé Y(n) relativement aux M temps de décalage sur les première et deuxième bandes de fréquences, on filtre ces composantes $y_{\tau i}(n)$ pour tous les $\tau i$, pour i compris entre 1 et M, dans les première et deuxième bandes de fréquence.

On obtient respectivement sur la première bande de fréquences $W_L$ un premier vecteur $Y_L(n)$ qui vérifie l'équation suivante :

$$Y_L(n) = \begin{pmatrix} y^L_{\tau 1}(n) \\ y^L_{\tau 2}(n) \\ ... \\ y^L_{\tau M}(n) \end{pmatrix}$$

et sur la deuxième bande de fréquences $W_H$ un second vecteur $Y_H(n)$ qui vérifie l'équation suivante :

$$Y_H(n) = \begin{pmatrix} y^H_{\tau 1}(n) \\ y^H_{\tau 2}(n) \\ ... \\ y^H_{\tau M}(n) \end{pmatrix}$$

pour i compris entre 1 et M.

On procède ainsi relativement à toutes les premières valeurs r(n), c'est-à-dire pour n compris entre 1 et Q.

Ensuite, à une étape 103, on calcule des vecteurs d'énergie pour chacun des premier et second signaux composés obtenus par filtrage respectif sur les première et deuxième bandes de fréquences $W_L$ et $W_H$.

Ainsi, relativement à la première bande de fréquences $W_L$, on obtient le vecteur d'énergie suivant :

$$E_L = \begin{pmatrix} e^1_L \\ e^2_L \\ ... \\ e^M_L \end{pmatrix}$$

On obtient sur la deuxième bande de fréquences WH, le vecteur d'énergie suivant :

$$E_H = \begin{pmatrix} e^1_H \\ e^2_H \\ ... \\ e^M_H \end{pmatrix}$$

où

$$e'_P = \sum_{k=1}^{Q} \left[ y''_n(k) \right]^2 \; ;$$

avec P est égal à L ou H ; et i compris entre 1 et M.

Ainsi, chaque vecteur d'énergie calculé $E_L$, respectivement $E_H$, contient M composantes correspondant respectivement aux valeurs d'énergie du signal composé Y pour les M temps de décalage $\tau i$, avec i compris entre 1 et M, sur la première bande de fréquences $W_L$, respectivement sur la deuxième bande de fréquences $W_H$.

Disposant ainsi d'un vecteur d'énergie contenant les énergies associées aux composantes des vecteurs Y(n) représentant le signal composé Y à la fois dans la première bande de fréquences et dans la deuxième bande de fréquence, on est ensuite en mesure de comparer les distributions des valeurs d'énergie afin de déterminer si la bande de fréquences W considérée est déjà utilisée pour la transmission d'un signal de télécommunications.

A cet effet, dans un mode de réalisation de la présente invention, on met en oeuvre, à une étape 104, un test statistique non paramétrique de distribution, tel qu'un test de type Wilcoxon bien connu de l'homme du métier.

Dans ces conditions, lorsque la bande de fréquences considérée W est déjà occupée par un signal de télécommunications ayant une fréquence cyclique $f_0$ de valeur inférieure à la valeur de la fréquence de référence $f_{ref,}$ la distribution de l'énergie dans la première bande de fréquences $W_L$ diffère en moyenne de la distribution de l'énergie dans la deuxième bande de fréquences $W_H$.

Une telle différence est détectée par la mise en oeuvre d'un test non paramétrique.

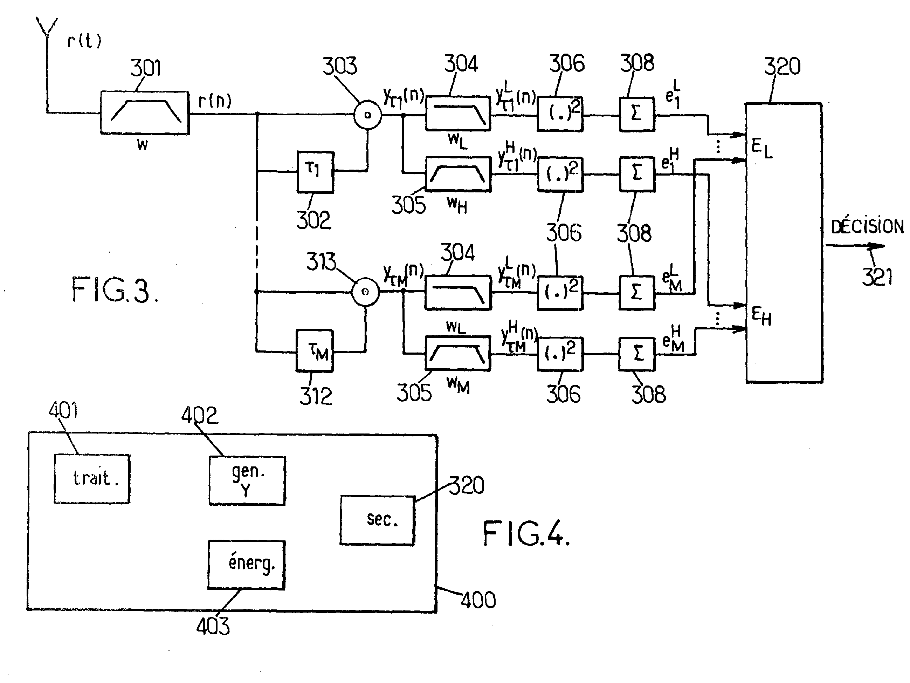

La figure 3 représente un schéma algorithmique de mise en oeuvre d'un procédé selon un mode de réalisation de la présente invention. Le signal reçu r(t) est en premier lieu échantillonné et filtré par un filtre 301 sur la bande de fréquences W pour laquelle on souhaite savoir si elle est occupée ou libre. On obtient ainsi, des valeurs discrètes r(n). Puis, le signal discret r(n) est multiplié au signal discret correspondant mais retardé de τ1 par un retardateur 302, r(n-τ1, et ainsi de suite jusqu'au signal retardé de τM par un retardateur 312, r(n-τM) au niveau de multiplicateurs de signaux respectifs 303, 313, qui ne sont pas tous représentés sur la figure 3, pour fournir en sortie les composantes respectives $y_{\tau i}(n)$ pour i compris entre 1 et M. Pour chacune de ces composantes $y_{\tau i}(n)$ du signal composé Y(n), on applique un premier filtre 304 sur la première bande de fréquences $W_L$ et on obtient les composantes $y^l_{\tau 1}(n)$ du vecteur $Y_L(n)$.

Parallèlement, on applique un second filtre 305 sur la deuxième bande de fréquences $W_H$ sur toutes ces composantes du signal composé Y(n) et on obtient les composantes $y^H_{\tau 1}(n)$ du vecteur $Y_H(n)$.

Puis, pour chacune des deux bandes de fréquences $W_L$ (respectivement $W_M$), on calcule la valeur au carré de chaque composante $y^l_{\tau i}(n)$ (respectivement $y^H_{\tau i}(n)$), c'est-à-dire la valeur d'énergie qui correspond à cette composante. Puis, pour chacun des M décalages de durée $\tau i$, on ajoute, par un additionneur 308, les Q valeurs d'énergie respectives obtenues pour les composantes $y^l_{\tau i}(n)$ (respectivement) $y^H_{\tau i}(n)$) pour n compris entre 1 et Q, on obtient respectivement les composantes du vecteur d'énergie $E_L$ (respectivement les composantes du vecteur d'énergie $E_H$).

Enfin, les différentes composantes $e^l_i$ et $e^H_i$ respectivement des vecteurs d'énergie $E_L$ et $E_H$ sont comparées la distribution des valeurs d'énergie ainsi obtenues d'une part dans la première bande de fréquences et d'autre part dans la seconde bande de fréquence par l'application d'un test non paramétrique 320 sur ces deux distributions de valeurs d'énergie. On compare ainsi la distribution de l'énergie du signal composé Y sur la première bande de fréquences $W_L$ relativement aux M temps de décalage et la distribution de l'énergie du signal composé sur la deuxième bande de fréquences $W_H$ relativement aux M temps de décalage.

Puis, sur la base de cette comparaison statistique, une décision quant à l'occupation ou non de la bande de fréquences W peut être prise.

En effet, si la distribution des énergies dans la bande de fréquences $W_L$ diffère en moyenne de la distribution des énergies dans la bande de fréquences $W_H$, alors on décide que la bande de fréquences W est occupée par un signal de télécommunications et n'est de ce fait pas libre pour être utilisée par un terminal de radio cognitive. Dans le cas contraire, on conclut que cette bande de fréquences W est libre.

La figure 4 illustre un dispositif 400 de détection d'une bande de fréquences libre selon un mode de réalisation de la présente invention. Il comprend une unité de traitement 401 adaptée pour obtenir des Q premières valeurs relatives au signal reçu r(n) pour des instants correspondants respectifs n dans la bande de fréquences, Q étant un nombre entier quelconque.

Il comprend en outre une unité de génération 402 qui comprend des retardateurs 302, 312, des multiplicateurs 303, 313, pour fournir un signal composé (Y) sous la forme de vecteurs ($Y_n$) respectivement associés aux premières valeurs, chaque vecteur de signal composé ayant M composantes résultant respectivement des produits de la première valeur de signal associée au vecteur avec M secondes valeurs de signai relatives au signal reçu respectivement pour M temps de décalage $\tau i$, pour i compris entre 1 et M, par rapport à l'instant correspondant à la première valeur.

Il comprend une unité de détermination d'un vecteur d'énergie 403 comprenant M composantes correspondant respectivement à l'énergie du signal composé pour les M temps de décalage sur une bande de fréquences déterminée.

L'unité de détermination 403 peut inclure un filtre adapté pour filtrer les vecteurs associés aux premières valeurs, sur une bande de fréquences déterminée, $W_L$, ou $W_H$, et obtenir un ensemble de vecteurs, $Y_L$ ou $Y_H$. Elle comprend également une unité de calcul d'énergies adaptée pour fournir un vecteur d'énergie, $E_L$, ou $E_H$, dans la bande de fréquences déterminée en calculant relativement à chaque temps de décalage, une valeur d'énergie de signal par sommation des carrés des composantes des vecteurs de cet ensemble de vecteurs qui correspondent au temps de décalage.

Puis, il comprend également une unité de décision 320 adaptée pour décider si la bande de fréquences considérée est libre, en déterminant si un signal cyclostationnaire est compris dans le signal reçu sur la base d'une comparaison de la distribution des valeurs d'énergies $E_L$, $E_H$ associées au signal composé sur la première $W_L$ et la deuxième $W_H$ bande de fréquences, situées de part et d'autre de la fréquence de référence $f_{ref}$. Cette unité de décision peut avantageusement être basée sur la mise en oeuvre d'un test non paramétrique.

Dans un mode de réalisation particulier, les unités 401, 402, 403 et 320 du dispositif de réception 400 sont des modules logiciels formant un programme d'ordinateur et comprenant des instructions aptes à mettre en oeuvre le procédé précédemment décrit, lors d'une exécution du programme par des moyens de traitement, non représentés, du dispositif de détection.

Ce programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio. L'invention concerne donc aussi un support d'enregistrement lisible par un ordinateur sur lequel est enregistré le programme d'ordinateur.

Le dispositif de détection qui vient d'être décrit peut être intégré dans un équipement de communication à travers un réseau. Cet équipement peut être un terminal d'utilisateur ou une entité du réseau de l'opérateur de télécommunications.

Ainsi, de manière avantageuse, un mode de réalisation de la présente invention permet de déterminer si une bande de fréquences peut être utilisée par un terminal de radio cognitive car elle est disponible, tout en restant aisée quant à sa mise en place et tout en évitant de se fonder sur des caractéristiques a priori, relatives à un signal de télécommunications à détecter dans la bande de fréquences considérée.

### Revendications

1. Procédé de détection d'une bande de fréquences (W) libre relativement à au moins un équipement de communication dans un réseau de télécommunications ;
   ledit procédé comprenant les étapes suivantes :

   /a/ obtenir des premières valeurs de signal (r(n)), relatives à un signal reçu (r(t)), pour des instants correspondants respectifs, dans ladite bande de fréquences ;
   /b/ obtenir un signal composé (Y) sous la forme de vecteurs ($Y_n$) respectivement associés auxdites premières valeurs de signal (r(n)), un vecteur de signal composé ($Y_n$) associé à une première valeur de signal (r(n)) ayant M composantes ($y_{\tau 1}(n)$, ..., $y_{\tau M}(n)$) résultant respectivement des produits de la première valeur de signal associée (r(n)) avec M secondes valeurs de signal ($r(n-_{\tau i})$), relatives au signal reçu respectivement pour M temps de décalage ($\tau i$) par rapport à l'instant correspondant à ladite première valeur de signal (r(n)), M étant un nombre entier supérieur ou égal à 2; et
   /c/ déterminer au moins un premier et un deuxième vecteur d'énergie ($E_L$, $E_H$), contenant chacun M composantes correspondant respectivement à des valeurs d'énergie du signal composé pour les M temps de décalage, respectivement sur une première bande de fréquences ($W_L$) et sur une deuxième bande de fréquences ($W_H$) situées de part et d'autre d'une fréquence de référence ($f_{ref}$); et
   /d/ décider si ladite bande de fréquences est libre sur la base d'une comparaison d'une distribution des valeurs d'énergie du signal composé sur la première bande de fréquences relativement aux M temps de décalage et d'une distribution des valeurs d'énergie du signal composé sur la deuxième bande de fréquences relativement aux M temps de décalage.

2. Procédé de détection selon la revendication 1, dans lequel la comparaison des distributions d'énergie est réalisée sur la base d'un test non paramétrique de distribution.

3. Procédé de détection selon la revendication 1 ou 2, dans lequel les première et deuxième bandes de fréquences sont de même largeur.

4. Procédé de détection selon l'une quelconque des revendications précédentes, dans lequel, à l'étape /c/, on détecte si un signal cyclostationnaire est présent dans le signal reçu sur la base de la comparaison des distributions des énergies.

5. Procédé de détection selon l'une quelconque des revendications, dans lequel la première bande de fréquences comprend les fréquences ayant une valeur comprise entre 0 et la valeur de ladite fréquence de référence ($f_{ref}$) et la deuxième bande de fréquences comprend les fréquences ayant une valeur comprise entre la valeur de la fréquence de référence et le double de la valeur de la fréquence de référence.

6. Procédé de détection selon l'une quelconque des revendications précédentes, dans lequel la fréquence de référence ($f_{ref}$) est supérieure à une fréquence cyclique ($f_0$) d'un signal de télécommunications dans le réseau de télécommunication.

7. Procédé de détection selon l'une des revendications précédentes, dans lequel, à l'étape /c/, on réalise les étapes suivantes :

/c1/ obtenir par filtrage des vecteurs associés aux premières valeurs, d'une part, sur la première bande de fréquences ($W_L$) un premier ensemble de vecteurs ($Y_L$), et d'autre part sur la deuxième bande de fréquences ($W_H$) un deuxième ensemble de vecteurs ($Y_H$) ;

/c2/ obtenir un premier ($E_L$), respectivement un deuxième ($E_H$), vecteur d'énergie dans la première ($W_L$), respectivement deuxième ($W_H$) bande de fréquences en déterminant relativement à chaque temps de décalage, une valeur d'énergie du signal composé par sommation des carrés des composantes des vecteurs du premier ($Y_L$), respectivement du deuxième ($Y_H$), ensemble de vecteurs qui correspondent audit temps de décalage ;

/c3/ comparer la distribution des valeurs d'énergie du signal composé sur la première bande de fréquences relativement aux M temps de décalage et la distribution des valeurs d'énergie du signal composé sur la deuxième bande de fréquence relativement aux M temps de décalage.

8. Dispositif de détection d'une bande de fréquences libre dans un réseau de télécommunications, comprenant :

- une unité de traitement (401) adaptée pour obtenir des premières valeurs de signal ($r(n)$) relatives à un signal reçu ($r(t)$) pour des instants correspondants respectifs, dans ladite bande de fréquences ;

- une unité de génération (402) pour fournir un signal composé ($Y$) sous la forme de vecteurs ($Y_n$) respectivement associés auxdites premières valeurs de signal ($r(n)$), un vecteur de signal composé ($Y_n$) associé à une première valeur de signal ($r(n)$) ayant M composantes ($y_{\tau 1}(n)$, ..., $y_{\tau M}(n)$) résultant respectivement des produits de la première valeur de signal associée ($r(n)$) avec M secondes valeurs de signal ($r(n-\tau_i)$) relatives au signal reçu respectivement pour M temps de décalage ($\tau i$) par rapport à l'instant correspondant à ladite première valeur de signal ($r(n)$), M étant un nombre entier supérieur ou égal à 2 ; et

- une unité de détermination (403) d'un vecteur d'énergie ($E_L$, $E_H$) contenant M composantes correspondant respectivement à l'énergie du signal composé pour les M temps de décalage, sur une bande de fréquences déterminée ;

- une unité de décision (320) adaptée pour décider si ladite bande de fréquences est libre, sur la base d'une comparaison d'une distribution des valeurs d'énergie du signal composé sur une première bande de fréquences relativement aux M temps de décalage et d'une distribution des valeurs d'énergie du signal composé sur une deuxième bande de fréquences relativement aux M temps de décalage, les deux bandes de fréquence étant situées de part et d'autre d'une fréquence de référence ($f_{ref}$).

9. Dispositif de détection selon la revendication 8, comprenant en outre une unité de détermination (403) de distribution d'énergies qui inclut :

- un filtre adapté pour filtrer les vecteurs associés aux premières valeurs de signal, sur une bande de fréquences déterminée ($W_L$, $W_H$) et obtenir un ensemble de vecteurs ($Y_L$, $Y_H$) ; et
- une unité de calcul d'énergies adaptée pour fournir un vecteur d'énergie ($E_L$, $E_H$) dans ladite bande de fréquences déterminée en calculant relativement à chaque temps de décalage, une valeur d'énergie du signal composé par sommation des carrés des composantes des vecteurs dudit ensemble de vecteurs qui correspondent audit temps de décalage.

**10.** Dispositif de détection selon la revendication 8 ou 9, dans lequel les première et deuxième bandes de fréquence sont de même largeur.

**11.** Equipement de communication à travers un réseau comprenant un dispositif de détection selon l'une quelconque des revendications 8 à 10.

**12.** Programme d'ordinateur destiné à être installé dans un dispositif de détection selon l'une quelconque des revendications 8 à 10, comprenant des instructions aptes à mettre en oeuvre le procédé selon l'une quelconque des revendications 1 à 7, lors d'une exécution du programme par des moyens de traitement du dispositif de détection.

**13.** Support d'enregistrement lisible par un ordinateur sur lequel est enregistré le programme d'ordinateur selon la revendication 12.

**Claims**

**1.** Method for detecting a free frequency band (W) relating to at least one piece of communication equipment in a telecommunications network, said method comprising the following steps:

/a/ obtaining first signal values (r(n)), relating to a received signal (r(t)), for respective corresponding moments in said frequency band;
/b/ obtaining a composite signal (Y) in the form of vectors ($Y_n$) respectively associated with said first signal values (r(n)), a composite signal vector ($Y_n$) associated with a first signal value (r(n)) having M components ($y_{\tau 1}$(n), ..., $y_{\tau M}$(n)) respectively resulting from the products of the associated first signal value (r(n)) and M second signal values (r(n-$\tau_i$)) relating to the received signal for M time shifts ($\tau i$) respectively in relation to the moment corresponding to said first signal value (r(n)), M being an integer greater than or equal to 2; and
/c/ determining at least a first and a second energy vector ($E_L$, $E_H$), each containing M components respectively corresponding to the energy values of the composite signal for the M time shifts, respectively over a first frequency band ($W_L$) and over a second frequency band ($W_H$) lying on either side of a reference frequency ($f_{ref}$); and
/d/ deciding whether said frequency band is free on the basis of a comparison of an energy distribution of the composite signal over the first frequency band relating to the M time shifts, with an energy distribution of the composite signal over the second frequency band relating to the M time shifts.

**2.** Detection method according to Claim 1, in which the comparison of the energy distributions is carried out on the basis of a nonparametric test of distribution.

**3.** Detection method according to Claim 1 or 2, in which the first and second frequency bands are of the same width.

**4.** Detection method according to any one of the preceding claims, in which in step /c/ it is detected whether a cyclostationary signal is present in the received signal on the basis of the comparison of the energy distributions.

**5.** Detection method according to any one of the preceding claims, in which the first frequency band comprises the frequencies with a value between 0 and the value of said reference frequency ($f_{ref}$), and the second frequency band comprises the frequencies with a value between the value of the reference frequency and twice the value of the reference frequency.

**6.** Detection method according to any one of the preceding claims, in which the reference frequency ($f_{ref}$) is higher than a cyclic frequency ($f_0$) of a telecommunications signal in the telecommunications network.

**7.** Detection method according to one of the preceding claims, in which in step /c/ the following steps are carried out:

/c1/ obtaining, by filtering, vectors associated with the first values, on the one hand a first set of vectors ($Y_L$)

over the first frequency band (W$_L$), and on the other hand a second set of vectors (Y$_H$) over the second frequency band (W$_H$);

/c2/ obtaining a first (E$_L$), and second (E$_H$) respectively, energy vector in the first (W$_L$), and second (W$_H$) respectively, frequency band by determining relative to each time shift an energy value of the composite signal by summing the squares of the components of the vectors of the first (Y$_L$), and second (Y$_H$) respectively, set of vectors that correspond to said time shift; and

/c3/ comparing the energy distribution of the composite signal over the first frequency band in relation to the M time shifts, with the energy distribution of the composite signal over the second frequency band in relation to the M time shifts.

8.  Device for detecting a free frequency band in a telecommunications network, comprising:

- a processing unit (401) suitable for obtaining first signal values (r(n)) relating to a received signal (r(t)) for respective corresponding moments in said frequency band;

- a generation unit (402) in order to provide a composite signal (Y) in the form of vectors (Y$_n$) respectively associated with said first signal values (r(n)), a composite signal vector (Y$_n$) associated with a first signal value (r(n)) having M components (y$_{\tau 1}$(n), ..., y$_{\tau M}$(n)) respectively resulting from the products of the associated first signal value (r(n)) and M second signal values (r(n-$\tau_i$)) relating to the received signal for M time shifts ($\tau i$) respectively in relation to the moment corresponding to said first signal value (r(n)), M being an integer greater than or equal to 2;

- a unit (403) for determining an energy vector (E$_L$, E$_H$) comprising M components respectively corresponding to the energy values of the composite signal for the M time shifts over a determined frequency band; and

- a decision unit (320) suitable for deciding whether said frequency band is free on the basis of a comparison of an energy distribution of the composite signal over a first frequency band relating to the M time shifts, with an energy distribution of the composite signal over a second frequency band relating to the M time shifts, the two frequency bands lying on either side of a reference frequency (f$_{ref}$).

9.  Detection device according to Claim 8, furthermore comprising a determination unit (403) for determining energy distribution that includes:

- a filter suitable for filtering the vectors associated with the first signal values, over a determined frequency band (W$_L$, W$_H$), and for obtaining a set of vectors (Y$_L$, Y$_H$); and

- an energy calculation unit suitable for providing an energy vector (E$_L$, E$_H$) in said frequency band determined by calculating, in relation to each time shift, an energy value of the composite signal by summing the squares of the vector components of said set of vectors which correspond to said time shift.

10.  Detection device according to Claim 8 or 9, in which the first and second frequency bands are of the same width.

11.  Piece of equipment for communication via a network comprising a detection device according to any one of Claims 8 to 10.

12.  Computer program intended to be installed in a detection device according to any one of claims 8 to 10, comprising instructions suitable for implementing the method according to any one of Claims 1 to 7 when the program is executed by processing means of the detection device.

13.  Recording medium that can be read by a computer on which the computer program according to Claim 12 is saved.


**Patentansprüche**

1.  Verfahren zur Erfassung eines freien Frequenzbands (W) bezüglich mindestens einer Kommunikationsausrüstung in einem Telekommunikationsnetzwerk; wobei das Verfahren die folgenden Schritte enthält:

/a/Erhalt erster Signalwerte (r(n)) bezüglich eines empfangenen Signals (r(t)) für jeweilige entsprechende Zeitpunkte im Frequenzband;

/b/Erhalt eines Verbundsignals (Y) in Form von je den ersten Signalwerten (r(n)) zugeordneten Vektoren (Y$_n$), wobei ein einem ersten Signalwert (r(n)) zugeordneter Verbundsignalvektor (Y$_n$) M Komponenten (y$_{\tau 1}$(n), ...,

$y_{\tau M}(n)$) hat, die je aus den Produkten des ersten zugeordneten Signalwerts ($r(n)$) mit M zweiten Signalwerten ($r (n-_{\tau j})$) bezüglich des empfangenen Signals jeweils für M Verzögerungszeiten ($\tau i$) bezüglich des Zeitpunkts entsprechend dem ersten Signalwert ($r(n)$) resultieren, wobei M eine ganze Zahl größer als oder gleich 2 ist; und /c/Bestimmung mindestens eines ersten und eines zweiten Energievektors ($E_L$, $E_H$), die jeder M Komponenten enthalten, welche je Energiewerten des Verbundsignals für die M Verzögerungszeiten entsprechen, in einem ersten Frequenzband ($W_L$) bzw. in einem zweiten Frequenzband ($W_H$), die sich zu beiden Seiten einer Bezugsfrequenz ($f_{ref}$) befinden, und /d/Entscheidung, ob das Frequenzband frei ist, auf der Basis eines Vergleichs einer Verteilung der Energiewerte des Verbundsignals im ersten Frequenzband bezüglich der M Verzögerungszeiten und einer Verteilung der Energiewerte des Verbundsignals im zweiten Frequenzband bezüglich der M Verzögerungszeiten.

2. Erfassungsverfahren nach Anspruch 1, bei dem der Vergleich der Energieverteilungen auf der Basis eines nicht parametrischen Verteilungstests erfolgt.

3. Erfassungsverfahren nach Anspruch 1 oder 2, bei dem das erste und das zweite Frequenzband von gleicher Breite sind.

4. Erfassungsverfahren nach einem der vorhergehenden Ansprüche, bei dem im Schritt /c/ auf der Basis des Vergleichs der Energieverteilungen erfasst wird, ob ein cyclostationäres Signal in dem empfangenen Signal vorhanden ist.

5. Erfassungsverfahren nach einem der vorhergehenden Ansprüche, bei dem das erste Frequenzband die Frequenzen mit einem Wert zwischen 0 und dem Wert der Bezugsfrequenz ($f_{ref}$) und das zweite Frequenzband die Frequenzen mit einem Wert zwischen dem Wert der Bezugsfrequenz und dem Doppelten des Werts der Bezugsfrequenz enthält.

6. Erfassungsverfahren nach einem der vorhergehenden Ansprüche, bei dem die Bezugsfrequenz ($f_{ref}$) höher als eine zyklische Frequenz ($f_0$) eines Telekommunikationssignals im Telekommunikationsnetzwerk ist.

7. Erfassungsverfahren nach einem der vorhergehenden Ansprüche, bei dem im Schritt /c/ die folgenden Schritte durchgeführt werden:

/c1/ Erhalt, durch Filterung der den ersten Werten zugeordneten Vektoren, einerseits im ersten Frequenzband ($W_L$) einer ersten Einheit von Vektoren ($Y_L$), und andererseits im zweiten Frequenzband ($W_H$) einer zweiten Einheit von Vektoren ($Y_H$),
/c2/ Erhalt eines ersten ($E_L$) bzw. zweiten ($E_H$) Energievektors im ersten ($W_L$) bzw. zweiten ($W_H$) Frequenzband, indem bezüglich jeder Verzögerungszeit ein Energiewert des Verbundsignals durch Summierung der Quadrate der Komponenten der Vektoren der ersten ($Y_L$) bzw. der zweiten ($Y_H$) Einheit von Vektoren bestimmt wird, die der Verzögerungszeit entsprechen,
/c3/ Vergleich der Verteilung der Energiewerte des Verbundsignals im ersten Frequenzband bezüglich der M Verzögerungszeiten und der Verteilung der Energiewerte des Verbundsignals im zweiten Frequenzband bezüglich der M Verzögerungszeiten.

8. Vorrichtung zur Erfassung eines freien Frequenzbands in einem Telekommunikationsnetzwerk, die enthält:

- eine Verarbeitungseinheit (401), die geeignet ist, um erste Signalwerte ($r(n)$) bezüglich eines empfangenen Signals ($r(t)$) für jeweilige entsprechende Zeitpunkte im Frequenzband zu erhalten;
- eine Erzeugungseinheit (402), um ein Verbundsignal (Y) in Form von Vektoren ($Y_n$) zu liefern, die je den ersten Signalwerten ($r(n)$) zugeordnet sind, wobei ein einem ersten Signalwert ($r(n)$) zugeordneter Verbundsignalvektor ($Y_n$) M Komponenten ($y_{\tau 1}(n)$, ..., $y_{\tau M}(n)$) hat, die je aus den Produkten des ersten zugeordneten Signalwerts ($r(n)$) mit M zweiten Signalwerten ($r(n-_{\tau j})$) bezüglich des empfangenen Signals jeweils für M Verzögerungszeiten ($\tau i$) bezüglich des Zeitpunkts entsprechend dem ersten Signalwert ($r(n)$) resultieren, wobei M eine ganze Zahl größer als oder gleich 2 ist; und
- eine Bestimmungseinheit (403) eines Energievektors ($E_L$, $E_H$), der M Komponenten enthält, die jeweils der Energie des Verbundsignals für die M Verzögerungszeiten in einem bestimmten Frequenzband entsprechen;
- eine Entscheidungseinheit (320), die geeignet ist, um zu entscheiden, ob das Frequenzband frei ist, auf der Basis eines Vergleichs einer Verteilung der Energiewerte des Verbundsignals in einem ersten Frequenzband bezüglich der M Verzögerungszeiten und einer Verteilung der Energiewerte des Verbundsignals in einem zweiten Frequenzband bezüglich der M Verzögerungszeiten, wobei die zwei Frequenzbänder sich zu beiden Seiten einer Bezugsfrequenz ($f_{ref}$) befinden.

9. Erfassungsvorrichtung nach Anspruch 8, die weiter eine Bestimmungseinheit (403) der Verteilung von Energien enthält, die umfasst:

- ein Filter, das geeignet ist, um die den ersten Signalwerten zugeordneten Vektoren in einem bestimmten Frequenzband ($W_L$, $W_H$) zu filtern und eine Gruppe von Vektoren ($Y_L$, $Y_H$) zu erhalten; und
- eine Einheit zur Berechnung von Energien, die geeignet ist, um einen Energievektor ($E_L$, $E_H$) in dem bestimmten Frequenzband zu liefern, indem bezüglich jeder Verzögerungszeit ein Energiewert des Verbundsignals durch Summierung der Quadrate der Komponenten der Vektoren der Gruppe von Vektoren berechnet wird, die der Verzögerungszeit entsprechen.

10. Erfassungsvorrichtung nach Anspruch 8 oder 9, bei der das erste und das zweite Frequenzband die gleiche Breite haben.

11. Ausrüstung zur Kommunikation über ein Netzwerk, die eine Erfassungsvorrichtung nach einem der Ansprüche 8 bis 10 enthält.

12. Computerprogramm, dazu bestimmt, in einer Erfassungsvorrichtung nach einem der Ansprüche 8 bis 10 installiert zu werden, das Anweisungen enthält, die geeignet sind, um das Verfahren nach einem der Ansprüche 1 bis 7 bei einer Ausführung des Programms durch Verarbeitungseinrichtungen der Erfassungsvorrichtung durchzuführen.

13. Computerlesbarer Aufzeichnungsträger, auf dem das Computerprogramm gemäß Anspruch 12 aufgezeichnet ist.

FIG.1.

FIG.2.

FIG.3.

FIG.4.

## EP 2 077 057 B1

**RÉFÉRENCES CITÉES DANS LA DESCRIPTION**

**Documents brevets cités dans la description**

*   WO 2004021126 A2